# EUROPEAN PATENT SPECIFICATION

(11) **EP 4 127 572 B1**
(45) Date of publication and mention of the grant of the patent: **25.02.2026**
(21) Application number: 21730092.0
(22) Date of filing: 18.05.2021
(51) Int. Cl.: F24H 3/04, F24H 9/18, B60H 1/00, F24H 1/14, F24H 9/00, F28F 3/12, F28F 13/12, B60H 1/22, F24H 1/00, F24H 1/12

(54) **ELECTRIC VEHICLE, ELECTRIC HEATER, AND ELECTRIC HEATING CAVITY ASSEMBLY OF ELECTRIC HEATER**
ELEKTROFAHRZEUG, ELEKTRISCHER HEIZER UND ELEKTRISCHE HEIZHOHLRAUMANORDNUNG EINES ELEKTRISCHEN HEIZERS
VÉHICULE ÉLECTRIQUE, DISPOSITIF DE CHAUFFAGE ÉLECTRIQUE ET ENSEMBLE CAVITÉ DE CHAUFFAGE ÉLECTRIQUE DE DISPOSITIF DE CHAUFFAGE ÉLECTRIQUE

(30) Priority: 02.02.2021 CN 202110145618
(43) Date of publication of application: 08.02.2023
(73) Proprietor: Zhenjiang Helmholtz Thermal & Transmission System Co., Ltd., Zhenjiang, Jiangsu 212000 (CN)
(72) Inventor: XU, Jian, Zhenjiang, Jiangsu 212000 (CN); YANG, Cheng, Zhenjiang, Jiangsu 212000 (CN); SHEN, Zhiwen, Zhenjiang, Jiangsu 212000 (CN); WANG, Peng, Zhenjiang, Jiangsu 212000 (CN); CHANG, Tao, Zhenjiang, Jiangsu 212000 (CN); JIANG, Yi, Zhenjiang, Jiangsu 212000 (CN)
(74) Representative: SSM Sandmair
(86) International application number: PCT/CN2021/094345
(87) International publication number: WO 2022/166033

(56) References cited:
- CN-A- 106 985 633
- CN-A- 107 771 411
- CN-A- 109 050 209
- DE-A1- 3 039 239
- US-A1- 2015 090 802

## Description

### TECHNICAL FIELD

The present application relates to the field of electric heating, and in particular, to an electric heater for an electric vehicle, an electric heating cavity assembly of the electric heater, and an electric vehicle including the electric heater.

### BACKGROUND

An electric vehicle (such as a hybrid power vehicle or a pure electric vehicle) is generally provided with an electric heater to control the temperature of the interior environment of the vehicle. Specifically, the electric heater is electrically connected to a power battery of the electric vehicle, electric energy is converted into heat energy by a heating component in the electric heater, and heat is transferred to the interior environment of the vehicle by a heat-dissipating system in the vehicle through a heat transfer medium, such that the temperature of the interior environment of the vehicle is controlled.

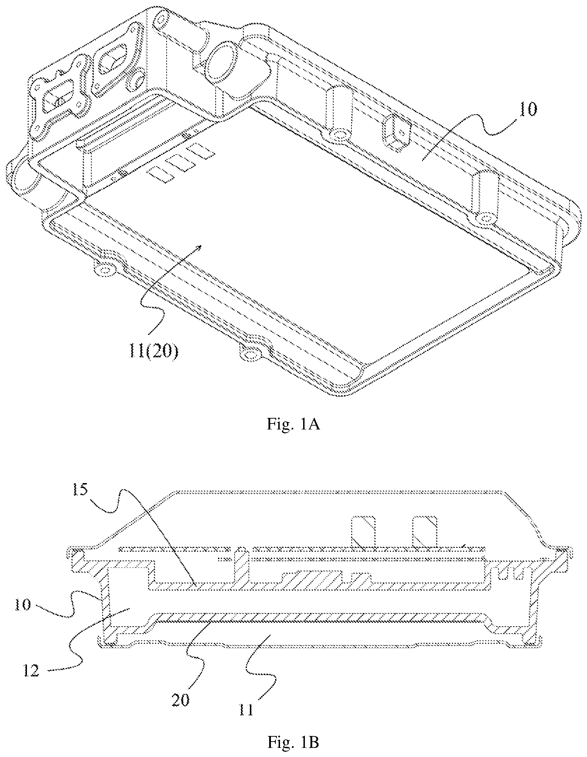

It is generally necessary to use the heat transfer medium to transmit the heat energy generated by the electric heater to the heat-dissipating system or an air-conditioning system of the vehicle. After the heating component of the electric heater generates heat, the heat is transferred to the heat transfer medium with a relatively low temperature, which is converted into a heat transfer medium with a relatively high temperature, and then the heat is conveyed to the heat-dissipating system or the air-conditioning system of the vehicle, thereby increasing the temperature of the interior environment of the vehicle. As shown in Figs. 1A and 1B, the heating cavity assembly 10 of the traditional electric heater mainly includes: a substrate piece made of a good heat conductor material; a heating cavity 11 located on one side of the substrate piece, accommodating an electric heating unit 20 and configured to convert electric energy into heat energy; and a heat exchange cavity 12 located on the other side of the substrate piece and configured to transfer the heat energy from the heating cavity to the heat transfer medium circularly flowing through the heat exchange area.

To improve the heat exchange efficiency, it is necessary to design a flow channel structure in the heat exchange cavity, tocontrol a flow path of the heat transfer medium, such that the heat transfer medium flows along a predetermined flow path to sufficiently receive the heat from the heating cavity 11. Therefore, for the electric heater, the structural design of the flow channel structure in the heat exchange cavity 12 will directly affect the heat exchange efficiency of the heat transfer medium.

In view of this, how to design a reasonable flow channel structure at the heat exchange cavity has become a technical problem to be solved in this field.

### SUMMARY

The present application provides a heating cavity assembly of an electric heater. The heating cavity assembly includes: an electric heating unit, located in a heating cavity and configured to convert electric energy into heat energy; a flow channel structure, located in a heat exchange cavity, configured to allow a heat transfer medium passing through the flow channel structure to receive heat energy from the electric heating unit and including a plurality of medium flow channels, wherein the plurality of medium flow channels extend in parallel to each other along respective extension track lines and the extension track lines with a translation relationship.

According to the invention the extension track line of each of the medium flow channels is provided with at least one discontinuous part, the discontinuous part of each of the medium flow channels forming a mixing flow area, and the numbers of the medium flow channels at the upstream and downstream of the mixing flow area are same or different.

Further according to the invention, a turbulent flow structure is arranged in the mixing flow area. The turbulent flow structure includes a plurality of turbulent flow columns which extend in the height direction of the electric heater and are distributed at intervals from each other.

Preferably, the extension track line includes at least one n shape.

Preferably, the medium flow channel includes: a first extension portion, linearly extending from a first opening of the medium flow channel along a first linear direction; a second extension portion, linearly extending from an end of the first extension portion along a second linear direction vertical to the first linear direction; a bending extension portion, linearly extending from an end of the second extension portion along the first linear direction; a third extension portion, extending from an end of the bending extension portion along the second linear direction; and a fourth extension portion, extending from an end of the third extension portion to the second opening of the medium flow channel along the first linear direction.

Preferably, one of the first linear direction and the second linear direction is the width direction of the electric heating device, and the other one is the length direction of the electric heating device.

Preferably, the extension track line is of an axisymmetric shape or a centrosymmetric shape.

Preferably, the flow channel structure of the electric heater includes:
an inflow cavity, configured to receive a heat transfer medium to be heated; and an outflow cavity, configured to collect and discharge a heated heat transfer medium and communicating with the inflow cavity through a plurality of medium flow channels which are arranged in parallel, wherein the first opening of each of the medium flow channels communicates with the inflow cavity, and the second opening of each of the medium flow channels communicates with the outflow cavity.

Preferably, the cross-sectional area of the inflow cavity gradually decreases along a flow direction of the heat transfer medium; and/or the cross-sectional area of the outflow cavity gradually increases along the flow direction of the heat transfer medium.

Preferably, a height of the inflow cavity in the height direction of the electric heater gradually decreases along the flow direction of the heat transfer medium; and/or a width of the inflow cavity in the width direction of the electric heater gradually decreases along the flow direction of the heat transfer medium; and/or a height of the outflow cavity in the height direction of the electric heater gradually increases along the flow direction of the heat transfer medium; and/or a width of the outflow cavity in the width direction of the electric heater gradually increases along the flow direction of the heat transfer medium.

Preferably, in the second linear direction, the first opening of each of the medium flow channels at the inflow cavity is arranged in parallel; and/or in the second linear direction, the second opening of each of the medium flow channels at the outflow cavity is arranged in parallel.

Preferably, the heating cavity assembly has at least one of the following features: each of the first openings is arranged in the first linear direction in a flush manner; the extension degree of each of the first openings towards an inner side wall of the heating cavity assembly in the first linear direction gradually increases along the flow direction of the heat transfer medium; the extension degree of each of the first openings towards the inner side wall of the heating cavity assembly in the first linear direction gradually decreases along the flow direction of the heat transfer medium; the extension degree of each of the first openings towards the inner side wall of the heating cavity assembly in the first linear direction gradually increases and then gradually decreases along the flow direction of the heat transfer medium; the extension degree of each of the first openings towards the inner side wall of the heating cavity assembly in the first linear direction gradually decreases and then gradually increases along the flow direction of the heat transfer medium; each of the second openings is arranged in the first linear direction in a flush manner; the extension degree of each of the second openings towards the inner side wall of the heating cavity assembly in the first linear direction gradually increases along the flow direction of the heat transfer medium; the extension degree of each of the second openings towards the inner side wall of the heating cavity assembly in the first linear direction gradually decreases along the flow direction of the heat transfer medium; the extension degree of each of the second openings towards the inner side wall of the heating cavity assembly in the first linear direction gradually increases and then gradually decreases along the flow direction of the heat transfer medium; and the extension degree of each of the second openings towards the inner side wall of the heating cavity assembly in the first linear direction gradually decreases and then gradually increases along the flow direction of the heat transfer medium.

Preferably, the extension track line of the at least one medium flow channel is discontinuous.

According to another aspect of the present application, an electric heater of an electric vehicle is further provided. The electric heater includes: a heating cavity assembly which is the above mentioned heating cavity assembly, and a first shell and a second shell which are arranged on two sides of the heating cavity assembly respectively.

According to another aspect of the present application, an electric vehicle is further provided. The electric vehicle includes the above mentioned electric heater. The electric vehicle is an pure-electric vehicle or a hybrid power vehicle.

According to the technical solution of the present application, the flow channel structure of the medium flow channel with a plurality of extension track lines which extend in parallel and have a translation relationship is arranged in the electric heater, such that the heat transfer medium is uniformly divided in the plurality of medium flow channels, the heat transfer medium can be heated uniformly, and the heat exchange efficiency of the electric heater is improved.

Other features and advantages of the present application will be described in detail in the following specific embodiments.

### BRIEF DESCRIPTION OF THE DRAWINGS

The accompany drawings constituting a part of the present application are used to provide further understanding of the present application. The schematic embodiments of the present application and description thereof are intended to illustrate the present application. In the accompanying drawings:
Fig. 1A is a perspective schematic view of a heating cavity assembly of an electric heater;
Fig. 1B is a section view of an electric heater;
Figs. 2A and 2B are respectively schematic diagrams of a first medium flow channel and a second medium flow channel not forming part of the invention;
Fig. 2C and Fig. 2D show the arrangement of the first medium flow channel and the second medium flow channel shown in Fig. 2A and Fig. 2B arranged adjacently, complementarily and in pairs;
Fig. 3 shows a schematic diagram of a flow channel structure not forming part of the invention;
Fig. 4 is a schematic top view of a flow channel structure not forming part of the invention;
Fig. 5 is an enlarged schematic view of the portion A in Fig. 4;
Fig. 6 is a perspective schematic view of the other side of the heating cavity assembly shown in Fig. 1;
Figs. 7 and 8 are respectively the C-C section view and the B-B sectional view in Fig. 6;
Fig. 9 is a respectively schematic diagram of a flow channel structure not forming part of the invention
Fig. 10 is a schematic diagram of a flow channel structure according to the invention;
Figs. 11 and 12 are respectively schematic top views of the flow channel structure of the embodiments shown in Figs. 9 and 10; Fig. 11 does not belong to the invention; Fig. 12 forms part of the invention;
Fig. 13 is an enlarged schematic view of the portion A in Fig. 11;
Fig. 14 is a perspective schematic view of the other side of the heating cavity assembly of the embodiment shown in Fig. 11 or 12; and
Figs. 15 and 16 are respective the B-B sectional view and the C-C sectional view in Fig. 14.

### DETAILED DESCRIPTION OF THE EMBODIMENTS

The technical solution of the present application will be described below in detail with reference to the accompanying drawings and embodiments.

An electric vehicle is generally provided with an electric heater for performing heat exchange with an air-conditioning system of the vehicle, thereby controlling the temperature of the interior environment of the vehicle. The electric heating device may be a PTC electric heater, but preferably, an electric heater with a thin-film resistor used as an electric heating unit.

The electric heater generally includes: a heating cavity assembly 10, a heat exchange cavity 12 for accommodating and heating a flow medium being formed in the heating cavity assembly 10; a first shell, the first shell being mounted on a first side of the heating cavity assembly 10, and an electrical cavity 21 provided with a control circuit board being formed between the first shell and the heating cavity assembly 10; and a second shell, the second shell being mounted on a second side of the heating cavity assembly 10, and a heating cavity 11 for accommodating an electric heating unit 20 being formed between the second shell and the second side. Generally, in the heating cavity assembly 10, a cover plate 15 for sealing the heat exchange cavity 12 is further provided to isolate the heat exchange cavity from the electrical cavity 13.

It may be known from the above basic structure that an interior of the electric heater may be divided into a heating cavity 11 for heating of the electric heating unit, a heat exchange cavity 12 which is adjacent to the heating cavity 11 and circulates a heat exchange medium inside, and an electrical cavity 13 which is isolated relative to the heat exchange cavity 12. This is a basic structure formed by arranging the first shell and the second shell on two sides of the heating cavity assembly respectively.

In the heating cavity assembly of the electric heater, the electric heating unit 20 is located in the heating cavity and is configured to convert electric energy into heat energy; and the flow channel structure 30 is located in the heat exchange cavity 12 and is configured to allow the heat transfer medium passing through the flow channel structure 30 to receive heat energy from the electric heating unit 20. As described above, to achieve a good heat exchange effect, it is necessary to propose an optimized design solution for the flow channel structure 30. Hereinafter, different design solutions of the flow channel structure will be explained and described below in detail in conjunction with description of the heating cavity assembly.

### I. An embodiment I of a heating cavity assembly

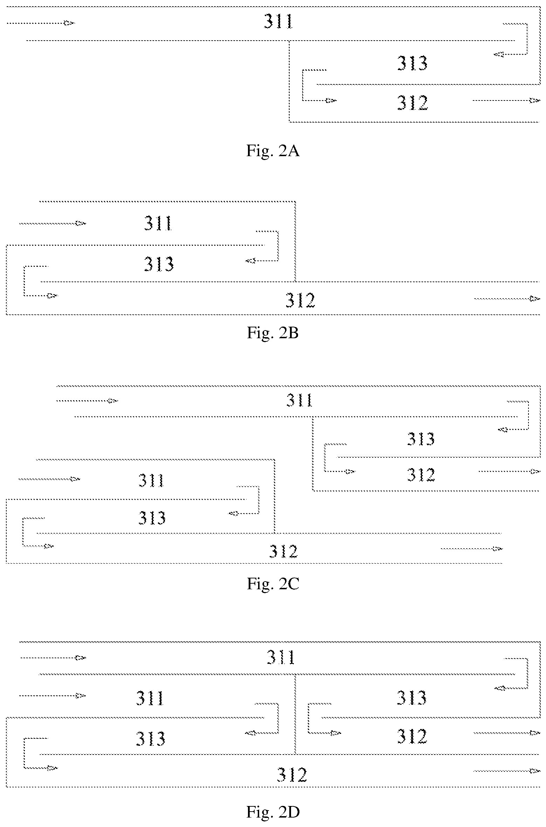

As shown in Figs. 2A, 2B, 2C, 2D, 3 and 4, which do not form part of the invention, the flow channel structure 30 includes at least one medium flow channel 31, wherein the medium flow 31 includes: a first extension portion 311 linearly extending from a first opening 321 of the medium flow channel 31; a second extension portion 312 linearly extending from a second opening 322 of the medium flow channel 31 and arranged in parallel with the first extension portion 311; and at least one turn-back extension portion 313 linearly extending between the first extension portion 311 and the second extension portion 312 in parallel and communicating with the first extension portion 311 and the second extension portion 312, the extension length of the turn-back extension portion 313 is substantially equal to the extension length of one of the first extension portion 311 and the second extension portion 312, but is less than the extension length of the other one of the first extension portion 311 and the second extension portion 312.

The first extension portion 311 starts to linearly extend from the first opening 321 and then, passing by the turn-back extension portion 313, reversely extends to the second extension portion 312 so as to arrive at the second opening 322. There may be a plurality of turn-back extension portions 313 so as to form reverse turn-back for many times, but preferably, as shown in Figs. 2A and 2B, there is one turn-back extension portion 313.

In the technical solution of the present application, the extension length of the turn-back extension portion 313 is substantially equal to the extension length of one of the first extension portion 311 and the second extension portion 312, but is less than the extension length of the other one of the first extension portion 311 and the second extension portion 312. Therefore, according to different situations, the medium flow channel 31 may be divided into a first medium flow channel and a second medium flow channel. In the first medium flow channel, as shown in Fig. 2A, the extension length of the first extension portion 311 is greater than the extension length of the second extension portion 312, and the extension length of the turn-back extension portion 313 is less than the extension length of the first extension portion 311 but is substantially equal to the extension length of the second extension portion 312. In the second medium flow channel, as shown in Fig. 2B, the extension length of the second extension portion 312 is greater than the first extension length of the first extension portion 311, and the extension length of the turn-back extension portion 313 is less than the extension length of the second extension portion 312 but is substantially equal to the extension length of the first extension portion 311.

Therefore, the outstanding design feature is that the length of the turn-back extension portion is not substantially equal to that of one, with the larger extension length, of the first extension portion and the second extension portion, but is obviously less than that of the one with the larger extension length. For example, in the exemplary solution shown in Fig. 2A, the length of the turn-back extension portion 313 is about half of the extension length of the first extension portion 311, or may be 1/5-4/5 or 2/5-3/5 of the extension length of the first extension portion 311. This ratio range is also applicable to the second medium flow channel shown in Fig. 2B.

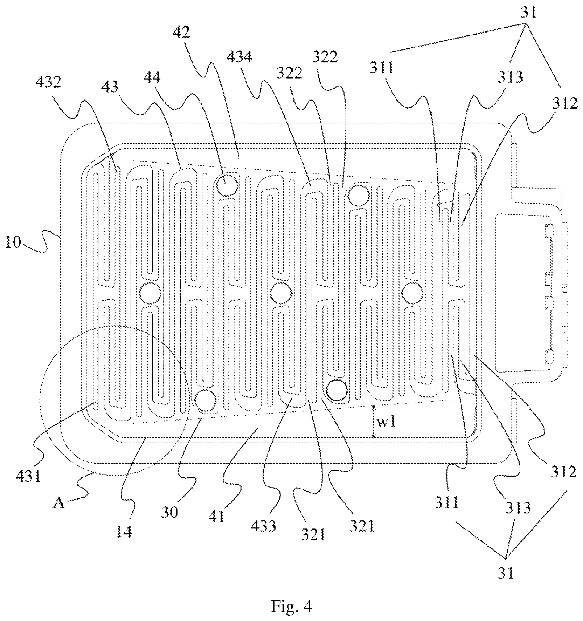

The reason for this design is based on the following considerations: the heat transfer medium flowing in each medium flow channel is gradually heated along the flow direction, the turn-back extension portion is provided to make the heat transfer medium with a higher temperature at a downstream area flow back to balance the temperature of the heat transfer medium with a lower temperature at an upstream area in a fluid cavity, and since the length of the turn-back extension portion is obviously less than that of one, with the larger extension length, of the first extension portion and the second extension portion, the temperature difference between the heat transfer medium with a higher temperature at the downstream area of the turn-back extension area and the heat transfer medium with a lower temperature at the upstream area will not be too large. Furthermore, the length of the turn-back extension portion is obviously less than that of one, with the larger extension length, of the first extension portion and the second extension portion, such that a flow channel partition extending along the length direction and the width direction (as shown in Fig. 4) is formed at the middle part of the heat exchange cavity 12, thereby facilitating connection between the heating cavity 12 and the cover plate 15 (which will be described hereinafter).

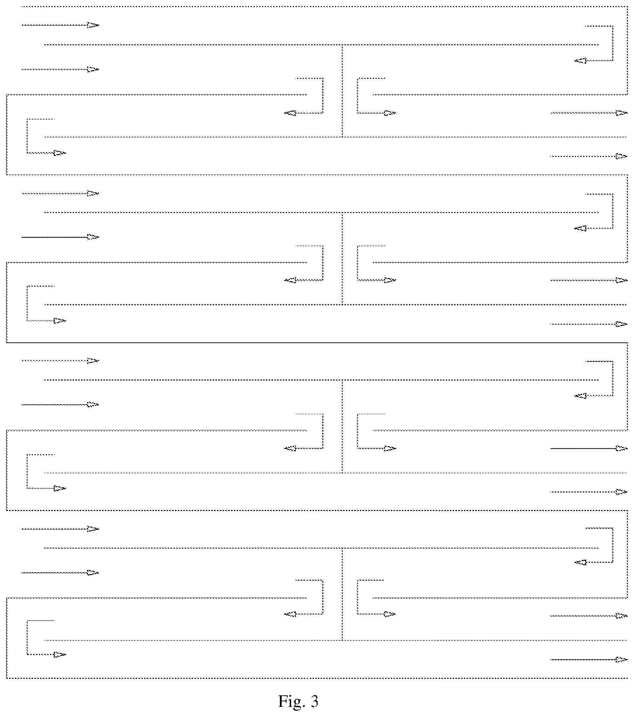

There may be one medium flow channel 31, but preferably, a plurality of medium flow channels are designed, as shown in Figs. 3 and 4.

As a further preferred example not being part of the invention, as shown in Figs. 2C, 2D, 3 and 4, the first medium flow channel and the second medium flow channel are arranged in pairs adjacently and complementarily (particularly as shown in Figs. 2C and 2D). In each pair of the first medium flow channel and the second medium flow channel, the two first openings 321 are arranged adjacent to each other and in parallel, and the two second openings 322 are arranged adjacent to each other and in parallel. The first medium flow channel and the second medium flow channel are arranged complementarily in parallel and can complement a blank area caused by the insufficient extension length of the turn-back extension portion 313 (relative to one, with the larger extension length, of the first extension portion and the second extension portion); moreover, the relative position relationship (such as a distance) of one first medium flow channel and the other complementary medium flow channel will also affect the complementation degree of the blank area (as shown in Figs. 2C and 2D). Preferably, as shown in Fig. 2D, the first medium flow channel and the second medium flow channel are directly adjacent to each other, thereby making full use of the arrangement space and improving the overall flow capacity of the flow channel structure.

As shown in Fig. 4, the linear extension direction of each extension portion is the width direction of (the heating cavity assembly of) the electric heater, but the present application is not limited thereto. The linear direction may be the length direction or width direction of the electric heater.

As shown in Fig. 4, in the heating cavity assembly, the flow channel structure 30 includes: an inflow cavity 41 configured to receive a heat transfer medium to be heated; and an outflow cavity 42 configured to collect and discharge the heated heat transfer medium and communicating with the inflow cavity 41 through a plurality of medium flow channels 31 which are arranged in parallel, wherein the first opening 321 of each of the medium flow channels 31 communicates with the inflow cavity 41, and the second opening 322 of each of the medium flow channels 31 communicates with the outflow cavity 42. Therefore, in a working condition, the low-temperature heat transfer medium from the air-conditioning system of the electric vehicle firstly flows into the inflow cavity 41, respectively flows into the first opening 321 of each medium flow channel 31 at the inflow cavity 41 and then successively passes through the first extension portion 311, the turn-back extension portion 313 and the second extension portion 312 to converge to the outflow cavity 42, and the high-temperature heat transfer medium flows to the air-conditioning system of the electric vehicle through the outflow cavity 42.

To guide the heat transfer medium to flow in the inflow cavity 41 and/or the outflow cavity 42, preferably, the cross-sectional area of the inflow cavity 41 gradually decreases along the flow direction of the heat transfer medium; and/or the cross-sectional area of the outflow cavity 42 gradually increases along the flow direction of the heat transfer medium. Therefore, the heat transfer medium entering each medium flow channel can be distributed averagely to avoid the problem of local overheating of the fluid cavity; and/or the heat transfer medium flowing out of each medium flow channel can be mixed sufficiently to improve the temperature balance of the heat transfer medium.

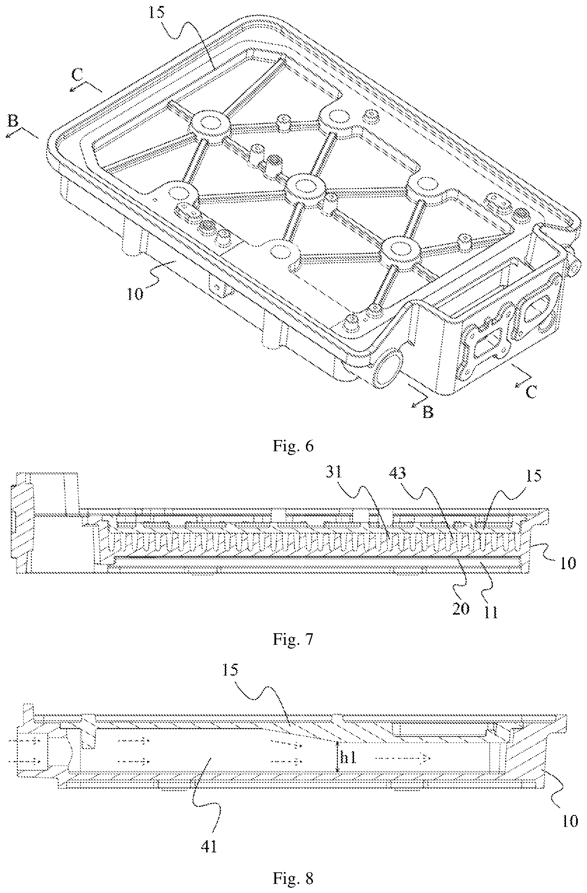

It may be achieved in various ways such that the cross-sectional area of the inflow cavity 41 gradually decreases along the flow direction of the heat transfer medium. For example, as shown in Figs. 4 and 8, a height h1 of the inflow cavity 41 in the height direction of the electric heater gradually decreases along the flow direction of the heat transfer medium; and/or a width w1 of the inflow cavity 41 in the width direction of the electric heater gradually decreases along the flow direction of the heat transfer medium.

Similarly, the height of the outflow cavity 42 in the height direction of the electric heater gradually increases along the flow direction of the heat transfer medium; and/or the width of the outflow cavity 42 in the width direction of the electric heater gradually increases along the flow direction of the heat transfer medium.

As shown in Figs. 4, 5, 6, 7 and 8, the flow channel structure 30 includes flow channel intervals 43; the inflow cavity 41, the outflow cavity 42 and the medium flow channel 31 are defined between the flow channel intervals 43 as well as between the flow channel interval 43 and an inner side wall 14 of the heating cavity; and the flow channel structure 30 includes a guide structure which is arranged at the flow channel intervals 43 and/or the inner side wall 14 of the heating cavity for guiding the heat transfer medium to flow. The guide structure is beneficial for the heat transfer medium to flow into the first opening 321 of each medium flow channel 31 from the inflow cavity 41 and is beneficial for the heat transfer medium to flow into the outflow cavity 42 from the second opening 322 of each medium flow channel 31.

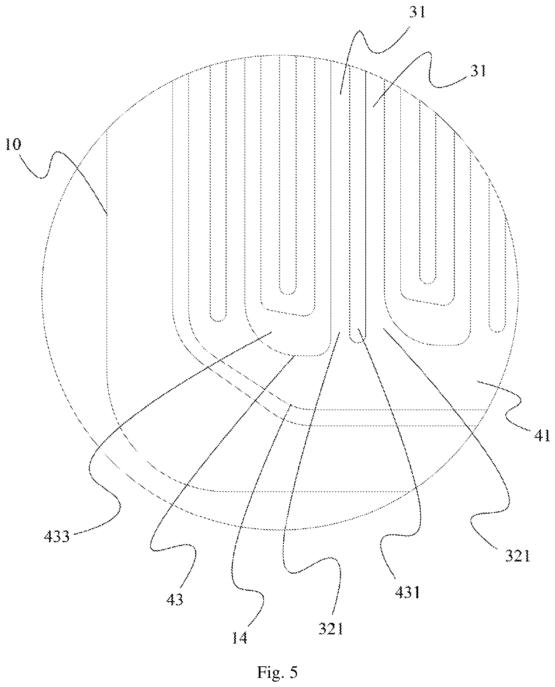

The guide structure has many structural forms, such as an arc-shaped outer surface, a flow guide fin, a flow guide groove and the like. Preferably, as shown in Figs. 4 and 5, the guide structure includes at least one of the following features:
the flow channel interval 43 is provided with a first guide structure at a first end part 431 between the first openings 321 of the first medium flow channel and the second medium flow channel which are arranged arbitrarily in pairs;
the flow channel interval 43 is provided with a second guide structure at a second end part 432 between the second openings 322 of the first medium flow channel and the second medium flow channel which are arranged arbitrarily in pairs;
the flow channel interval 43 is provided with a third guide structure at a third end part 433 between the first openings 321 of the first medium flow channel and the second medium flow channel which are arranged adjacently in pairs; and
the flow channel interval 43 is provided with a fourth guide structure at a fourth end part 434 between the second openings 322 of the first medium flow channel and the second medium flow channel which are arranged adjacently in pairs.

In addition, as shown in Fig. 4, the inner side wall 14 of the heating cavity may also be provided with an inclined extension part to guide the heat transfer medium to flow into and out of the medium flow channel 31.

In addition, as described above, the heating cavity assembly includes a cover plate 15 for closing the flow channel structure, such that the flow channel interval 43 extends between a bottom surface of the heat exchange cavity and the cover plate 15 along a thickness direction of the electric heater, thereby defining various medium flow channels, the inflow cavity and the outflow cavity, together with the inner side wall of the heat exchange cavity.

To facilitate the mounting of the cover plate 15, as shown in Fig. 4, the flow channel interval 43 is provided with at least one mounting position 44 at a position that does not interfere with the medium flow channel 31, such as a circular area marked with 44 as shown in Fig. 4 (other circular areas are not marked). These mounting positions 44 may be selected and designed according to the specific working conditions. Therefore, when the cover plate 15 is mounted at the heating cavity assembly, in addition to that fixed sealing connection is formed by an edge part of the cover plate 15, fixed connection can be formed at a middle part of the cover plate 15, such that a firmer and more reliable fixed relationship can be achieved to tolerate a high-pressure heat transfer medium in the heat exchange cavity.

One example of the heating cavity assembly not forming part of the invention is described above in detail, and another example is described below.

### II. An embodiment II of a heating cavity assembly

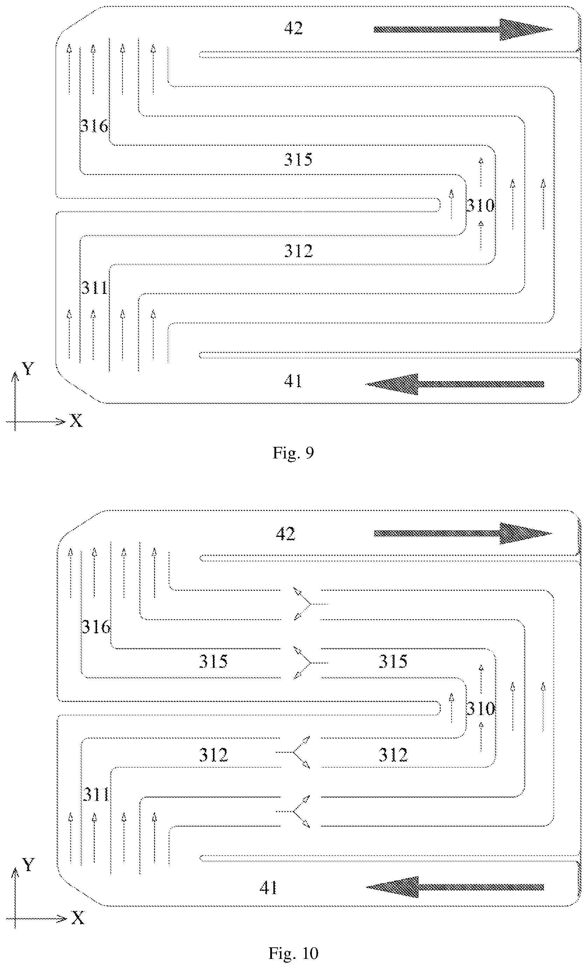

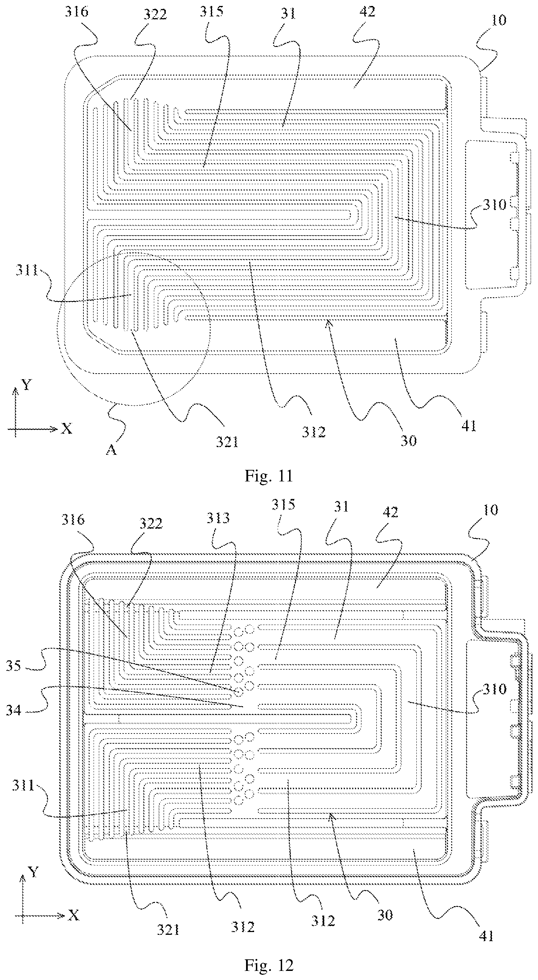

As shown in Figs. 9, 10, 11 and 12, the flow channel structure 30 includes a plurality of medium flow channels 31. Figures 10 and 12 form part of the invention; figures 9 and 11 do not form part of the invention.

The plurality of medium flow channels 31 respectively extending along respective extension track lines (not marked) in parallel to each other, and the extension track lines have a translation relationship. The so-called "extension track line" means that each flow channel may be abstracted as a track line, for example, in the schematic diagrams shown in Figs. 9 and 10, a center extension line of the flow channel may be regarded as the extension track line.

As shown in Figs. 9 and 10, different extension track lines may form different shapes, for example, as shown in the figures, the extension lines include at least one n shape. However, the present application is not limited thereto, the extension track lines may form an axisymmetric shape or a centrosymmetric shape, such as an annular shape.

In the Embodiment II, the medium flow channels 31 extend in parallel to each other and have a translation relationship therebetween; therefore, both the inlet and outlet of each medium flow channel 31 are arranged adjacent to each other and in parallel, thereby greatly improving the flow property of the electric heater for the heat transfer medium. In addition, the aforementioned adjacent parallel arrangement mode can also facilitate the arrangement of a guide structure for guiding the heat transfer medium in the heat exchange cavity: on one hand, the structural design of the guide structure in the heat exchange cavity is relatively simple and convenient, thereby reducing the difficulty of processing and manufacturing; and on the other hand, a distribution area or an extension length of the guide structure in the heat exchange cavity can be defined within a relatively small or short range, which is beneficial to meeting the lightweight design requirement of the electric heater.

As shown in Figs. 9, 10, 11 and 12, in the embodiment of the n-shaped extension track line, the medium flow channel 31 includes: a first extension portion 311 linearly extending from a first opening 321 of the medium flow channel 31 along a first linear direction Y; a second extension portion 312 linearly extending from an end of the first extension portion 311 along a second linear direction X vertical to the first linear direction Y; a bending extension portion 310 linearly extending from an end of the second extension portion 312 along the first linear direction Y; a third extension portion 315 extending from an end of the bending extension portion 310 along the second linear direction X; and a fourth extension portion 316 extending from an end of the third extension portion 315 to a second opening 322 of the medium flow channel 31 along the first linear direction Y. As shown in Fig. 11, the first linear direction Y is the width direction of the electric heater, but the present application is not limited thereto. The first linear direction Y may be the length direction, and the second linear direction X may be the width direction.

As shown in Fig. 12, similar to Fig. 4, in the heating cavity assembly, the flow channel structure 30 includes: an inflow cavity 41 configured to receive a heat transfer medium to be heated; and an outflow cavity 42 configured to collect and discharge a heated heat transfer medium and communicating with the inflow cavity 41 through a plurality of medium flow channels 31 which are arranged in parallel, wherein the first opening 321 of each of the medium flow channels 31 communicates with the inflow cavity 41, and the second opening 322 of each of the medium flow channels 31 communicates with the outflow cavity 42. Therefore, in a working condition, the low-temperature heat transfer medium from the air-conditioning system of the electric vehicle firstly flows into the inflow cavity 41, respectively flows into the first opening 321 of each medium flow channel 31 at the inflow cavity 41 and then successively passes through the first extension portion 311, the turn-back extension portion 313 and the second extension portion 312 to converge to the outflow cavity 42, and the high-temperature heat transfer medium flows to the air-conditioning system of the electric vehicle through the outflow cavity 42.

To guide the heat transfer medium to flow in the inflow cavity 41 and/or the outflow cavity 42, preferably, the cross-sectional area of the inflow cavity 41 gradually decreases along the flow direction of the heat transfer medium; and/or the cross-sectional area of the outflow cavity 42 gradually increases along the flow direction of the heat transfer medium. Therefore, the heat transfer medium entering each medium flow channel can be distributed averagely to avoid the problem of local overheating of the fluid cavity; and/or the heat transfer medium flowing out of each medium flow channel can be mixed sufficiently to improve the temperature balance of the heat transfer medium.

It may be achieved in various ways such that the cross-sectional area of the inflow cavity 41 gradually decreases along the flow direction of the heat transfer medium.

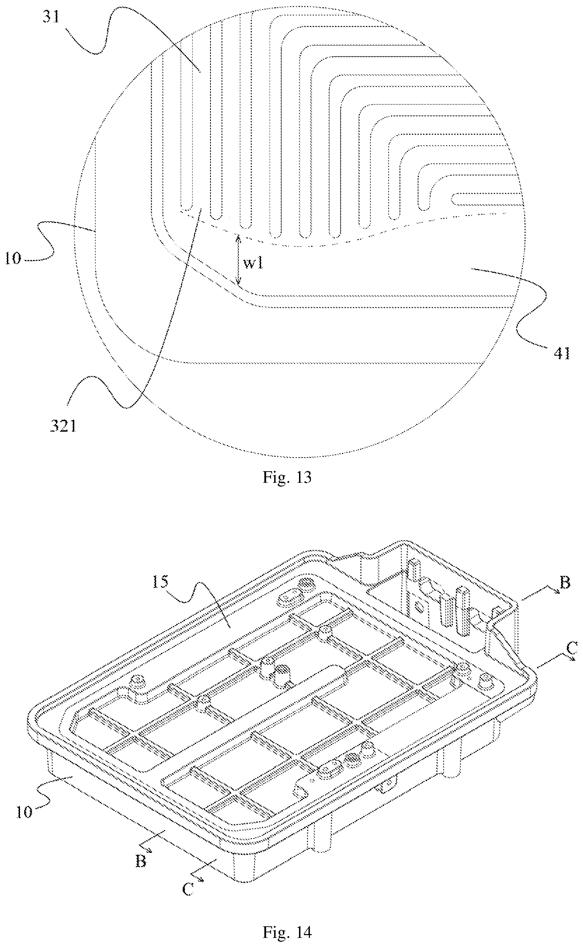

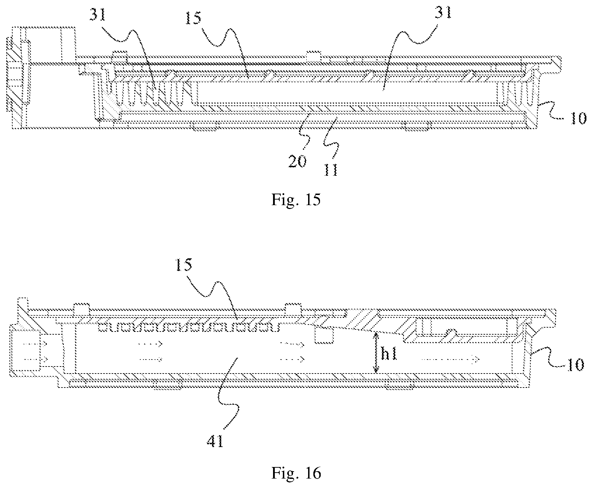

For example, as shown in Figs. 13, 14, 15 and 16, a height h1 of the inflow cavity 41 in the height direction of the electric heater gradually decreases along the flow direction of the heat transfer medium; and/or a width w1 of the inflow cavity 41 in the width direction of the electric heater gradually decreases along the flow direction of the heat transfer medium.

Similarly, the height of the outflow cavity 42 in the height direction of the electric heater gradually increases along the flow direction of the heat transfer medium; and/or the width of the outflow cavity 42 in the width direction of the electric heater gradually increases along the flow direction of the heat transfer medium.

As shown in Figs. 11, 12 and 13, in the second linear direction X, the first opening 321 of each of the medium flow channels 31 at the inflow cavity 41 is arranged in parallel; and/or in the second linear direction X, the second opening 322 of each of the medium flow channels 31 at the outflow cavity 42 is arranged in parallel. The parallel adjacent arrangement mode of the first openings 321 and/or the second openings 322 is the design feature of the Embodiment II.

Preferably, according to different working conditions, on the basis that the first openings 321 and/or the second openings 322 are arranged adjacently and in parallel, the extension degree of each opening may be designed into different ways. For example, each first opening 321 is arranged in the first linear direction Y in a flush manner; or the extension degree of each first opening 321 towards the inner side wall of the heating cavity assembly in the first linear direction Y gradually increases along the flow direction of the heat transfer medium (that is, the distance is getting closer and closer, as shown in Fig. 12); or the extension degree of each first opening 321 towards the inner side wall of the heating cavity assembly in the first linear direction Y gradually decreases along the flow direction of the heat transfer medium (that is, the distance is getting farther and farther); or the extension degree of each first opening 321 towards the inner side wall of the heating cavity assembly in the first linear direction Y gradually increases and then gradually decreases along the flow direction of the heat transfer medium (as shown in Figs. 11 and 13); or the extension degree of each first opening 321 towards the inner side wall of the heating cavity assembly in the first linear direction Y gradually decreases and then gradually increases along the flow direction of the heat transfer medium.

Similarly, for the second opening, each second opening 322 is arranged in the first linear direction Y in a flush manner; or the extension degree of each second opening 322 towards the inner side wall of the heating cavity assembly in the first linear direction Y gradually increases along the flow direction of the heat transfer medium; or the extension degree of each second opening 322 towards the inner side wall of the heating cavity assembly in the first linear direction Y gradually decreases along the flow direction of the heat transfer medium; or the extension degree of each second opening 322 towards the inner side wall of the heating cavity assembly in the first linear direction Y gradually increases and then gradually decreases along the flow direction of the heat transfer medium; or the extension degree of each second opening 322 towards the inner side wall of the heating cavity assembly in the first linear direction Y gradually decreases and then gradually increases along the flow direction of the heat transfer medium.

In the preferred embodiment, in addition to the characteristic that the first opening 321 and the second opening 322 are arranged adjacently and in parallel, the extension length of a flow channel partition wall is designed to be different, such that it may select flush arrangement or have the above various variation modes for each first opening 321 and each second opening 322. Therefore, on one hand, the extension length of each medium flow channel can be designed to be same or different, and on the other hand, the flow time of the heat transfer medium in each medium flow channel can be controlled, thereby optimizing the heat transfer working condition of the heat transfer medium flowing in each medium flow channel in the flowing process. In addition, in the inflow cavity 41 and/or the outflow cavity 42, the flow channel partition wall forming the opening is designed into different extension degrees, thereby achieving a turbulent flow effect. Specifically, before the heat transfer medium enters each first opening 321 from the inflow cavity 41, the heat transfer medium entering each first opening 321 from the inflow cavity 41 can have a relatively uniform temperature by the turbulent flow effect; similarly, after the heat transfer medium enters the outflow cavity 42 from each second opening 322,the heat transfer medium in the outflow cavity 42 can achieve high uniformity by the turbulent flow effect.

According to the invention, as shown in Figs. 10 and 12, preferably, the extension track line of at least one medium flow channel 31 may be discontinuous, may also be continuous, or may be partially continuous and partially discontinuous. These variation modes should fall within the protection scope of the present application. In case of the plurality of medium flow channels 31, the extension track line of each medium flow channel 31 has at least one discontinuous part, and a mixing flow area 34 is formed at the discontinuous part of each medium flow channel 31. As shown in Fig. 12, there are two mixing flow areas. The numbers of the medium flow channels at the upstream and downstream of the mixing flow areas 34 are same or different, for example, the numbers are different in the embodiment shown in Fig. 12.

By providing the mixing flow area 34, the medium flowing in each medium flow channel 31 firstly converges into the mixing flow area 34 to mix and exchange heat mutually, such that the temperature of the medium in the mixing flow area 34 substantially maintains consistent. Then the mediums flow to each medium flow channel 31 at the downstream from the mixing flow area 34. In this way, the temperature of the medium achieves high uniformity in the flowing process. Preferably, the mixing flow area 34 is provided with a turbulent flow structure 35, such as various appropriate mixing flow channels for mixing different mediums; or as shown in Fig. 12, the turbulent flow structure 35 may include a plurality of turbulent flow columns which extend in the height direction of the electric heater and are distributed at intervals from each other.

The embodiment II of the heating cavity assembly provided by the present application is described above in detail. It should be noted that although the two embodiments are described separately, those skilled in the art should understand that the two embodiments and the variations thereof may share some technical features, for example, the guide structure described in the embodiment I may also be applied to the embodiment II, and the turbulent flow and mixing flow features described in the embodiment II may also be applied to the embodiment I. Therefore, on the premise of not affecting the overall layout of the flow channel, the above text and the technical features in the accompanying drawings of the description may be interchanged, and no detailed examples will be given here. These variations belong to the technical content disclosed by the present application and fall within the protection scope of the present application.

### III. Electric vehicle

The above technical solutions of the present application may be applied to various working conditions, such as various carrying tools, particularly electric vehicles. The electric vehicle provided by the present application includes the above electric heater. The electric vehicle is an pure-electric vehicle or a hybrid power vehicle.

The preferred embodiments of the present invention are described above in detail; however, the present invention is not limited to the specific details of the above embodiments forming part of the invention. Within the scope of the technical concept of the present invention as defined in the claims, various simple variations may be made.

## Claims

1. A heating cavity assembly of an electric heater, the heating cavity assembly comprising:
an electric heating unit (20), located in a heating cavity (11) and configured to convert electric energy into heat energy; and
a flow channel structure (30), located in the heat exchange cavity (12) and configured to allow a heat transfer medium passing through the flow channel structure (30) to receive heat energy from the electric heating unit (20), **characterized in that**,
the flow channel structure (30) comprises a plurality of medium flow channels (31), the plurality of medium flow channels (31) extending in parallel to each other along respective extension track lines, and the extension track lines with a translation relationship,
wherein the extension track line of each of the medium flow channels (31) is provided with at least one discontinuous part, the discontinuous part of each of the medium flow channels (31) forming a mixing flow area (34), and the numbers of the medium flow channels at the upstream and downstream of the mixing flow area (34) are same or different, and
wherein a turbulent flow structure (35) is arranged in the mixing flow area (34), the turbulent flow structure (35) comprising a plurality of turbulent flow columns which extend in the height direction of the electric heater and are distributed at intervals from each other.

2. The heating cavity assembly of the electric heater of claim 1, **characterized in that**, the extension track line comprises at least one n shape.

3. The heating cavity assembly of the electric heater of claim 2, **characterized in that**, the medium flow channel (31) comprises:
a first extension portion (311), linearly extending from a first opening (321) of the medium flow channel (31) along a first linear direction (Y);
a second extension portion (312), linearly extending from an end of the first extension portion (311) along a second linear direction (X) vertical to the first linear direction (Y);
a bending extension portion (310), linearly extending from an end of the second extension portion (312) along the first linear direction (Y);
a third extension portion (315), extending from an end of the bending extension portion (310) along the second linear direction (X); and
a fourth extension portion (316), extending from an end of the third extension portion (315) to a second opening (322) of the medium flow channel (31) along the first linear direction (Y).

4. The heating cavity assembly of the electric heater of claim 3, **characterized in that**, one of the first linear direction (Y) and the second linear direction (X) is the width direction of the electric heating device, and the other one is the length direction of the electric heating device.

5. The heating cavity assembly of the electric heater of claim 1, **characterized in that**, the extension track line is of an axisymmetric shape or a centrosymmetric shape.

6. The heating cavity assembly of the electric heater of claim 1, **characterized in that**, the flow channel structure (30) of the electric heater comprises:
an inflow cavity (41), configured to receive a heat transfer medium to be heated; and
an outflow cavity (42), configured to collect and discharge a heated heat transfer medium and communicating with the inflow cavity (41) through a plurality of medium flow channels (31) which are arranged in parallel,
wherein the first opening (321) of each of the medium flow channels (31) communicates with the inflow cavity (41), and the second opening (322) of each of the medium flow channels (31) communicates with the outflow cavity (42).

7. The heating cavity assembly of the electric heater of claim 6, **characterized in that**, the cross-sectional area of the inflow cavity (41) gradually decreases along the flow direction of the heat transfer medium; and/or
the cross-sectional area of the outflow cavity (42) gradually increases along the flow direction of the heat transfer medium.

8. The heating cavity assembly of the electric heater of claim 7, **characterized in that**,
a height (h1) of the inflow cavity (41) in the height direction of the electric heater gradually decreases along the flow direction of the heat transfer medium; and/or
a width (w1) of the inflow cavity (41) in the width direction of the electric heater gradually decreases along the flow direction of the heat transfer medium; and/or
a height of the outflow cavity (42) in the height direction of the electric heater gradually increases along the flow direction of the heat transfer medium; and/or
a width of the outflow cavity (42) in the width direction of the electric heater gradually increases along the flow direction of the heat transfer medium.

9. The heating cavity assembly of the electric heater of claim 4, **characterized in that**,
in the second linear direction (X), the first opening (321) of each of the medium flow channels (31) at the inflow cavity (41) is arranged in parallel; and/or
in the second linear direction (X), the second opening (322) of each of the medium flow channels (31) at the outflow cavity (42) is arranged in parallel.

10. The heating cavity assembly of the electric heater of claim 9, **characterized in that**, the heating cavity assembly has at least one of the following features:
each of the first openings (321) is arranged in the first linear direction (Y) in a flush manner;
the extension degree of each of the first openings (321) towards an inner side wall of the heating cavity assembly in the first linear direction (Y) gradually increases along the flow direction of the heat transfer medium;
the extension degree of each of the first openings (321) towards the inner side wall of the heating cavity assembly in the first linear direction (Y) gradually decreases along the flow direction of the heat transfer medium;
the extension degree of each of the first openings (321) towards the inner side wall of the heating cavity assembly in the first linear direction (Y) gradually increases and then gradually decreases along the flow direction of the heat transfer medium;
the extension degree of each of the first openings (321) towards the inner side wall of the heating cavity assembly in the first linear direction (Y) gradually decreases and then gradually increases along the flow direction of the heat transfer medium;
each of the second openings (322) is arranged in the first linear direction (Y) in a flush manner;
the extension degree of each of the second openings (322) towards the inner side wall of the heating cavity assembly in the first linear direction (Y) gradually increases along the flow direction of the heat transfer medium;
the extension degree of each of the second openings (322) towards the inner side wall of the heating cavity assembly in the first linear direction (Y) gradually decreases along the flow direction of the heat transfer medium;
the extension degree of each of the second openings (322) towards the inner side wall of the heating cavity assembly in the first linear direction (Y) gradually increases and then gradually decreases along the flow direction of the heat transfer medium; and
the extension degree of each of the second openings (322) towards the inner side wall of the heating cavity assembly in the first linear direction (Y) gradually decreases and then gradually increases along the flow direction of the heat transfer medium.

11. The heating cavity assembly of the electric heater of any one of claims 1-10, **characterized in that**, the extension track line of the at least one medium flow channel (31) is discontinuous.

12. An electric heater of an electric vehicle, **characterized in that**, the electric heater comprising:
a heating cavity assembly, the heating cavity assembly being the heating cavity assembly of any one of claims 1-11; and
a first shell and a second shell, the first shell and the second shell being arranged on two sides of the heating cavity assembly respectively.

13. An electric vehicle, **characterized in that**, the electric vehicle comprising the electric heater of claim 12, the electric vehicle being an pure-electric vehicle or a hybrid power vehicle.

## Patentansprüche

1. Eine Heizkammeranordnung eines elektrischen Heizgeräts, wobei die Heizkammeranordnung umfasst:
eine elektrische Heizeinheit (20), die in einem Heizraum (11) angeordnet und dazu eingerichtet ist, elektrische Energie in Wärmeenergie umzuwandeln; und
eine Strömungskanalstruktur (30), die sich in dem Wärmeaustauschhohlraum (12) befindet und dazu eingerichtet ist, dass ein Wärmeübertragungsmedium, das durch die Strömungskanalstruktur (30) strömt, Wärmeenergie von der elektrischen Heizeinheit (20) aufnehmen kann, **dadurch gekennzeichnet, dass**
die Strömungskanalstruktur (30) mehrere Mediumströmungskanäle (31) umfasst, wobei sich die mehreren Mediumströmungskanäle (31) parallel zueinander entlang jeweiliger Verlängerungsspurlinien erstrecken und die Verlängerungsspurlinien eine Translationsbeziehung aufweisen,
wobei die Verlängerungsspurlinie jedes der Mediumströmungskanäle (31) mit mindestens einem unterbrochenen Teil versehen ist, wobei der unterbrochene Teil jedes der Mediumströmungskanäle (31) einen Mischströmungsbereich (34) bildet und die Anzahl der Mediumströmungskanäle stromaufwärts und stromabwärts des Mischströmungsbereichs (34) gleich oder unterschiedlich ist, und
wobei eine Turbulenzströmungsstruktur (35) in dem Mischströmungsbereich (34) angeordnet ist, wobei die Turbulenzströmungsstruktur (35) mehrere Turbulenzströmungssäulen umfasst, die sich in der Höhenrichtung des elektrischen Heizgeräts erstrecken und in Abständen voneinander verteilt sind.

2. Die Heizkammeranordnung des elektrischen Heizgeräts nach Anspruch 1, **gekennzeichnet dadurch, dass** die Verlängerungsspurlinie mindestens eine n-Form umfasst.

3. Die Heizkammeranordnung des elektrischen Heizgeräts nach Anspruch 2, **dadurch gekennzeichnet, dass** der Mediumströmungskanal (31) umfasst:
einen ersten Verlängerungsabschnitt (311), der sich linear von einer ersten Öffnung (321) des Mediumströmungskanals (31) entlang einer ersten linearen Richtung (Y) erstreckt;
einen zweiten Verlängerungsabschnitt (312), der sich linear von einem Ende des ersten Verlängerungsabschnitts (311) entlang einer zweiten linearen Richtung (X) senkrecht zur ersten linearen Richtung (Y) erstreckt;
einen Biegeverlängerungsabschnitt (310), der sich linear von einem Ende des zweiten Verlängerungsabschnitts (312) entlang der ersten linearen Richtung (Y) erstreckt;
einen dritten Verlängerungsabschnitt (315), der sich von einem Ende des Biegeverlängerungsabschnitts (310) entlang der zweiten linearen Richtung (X) erstreckt; und
einen vierten Verlängerungsabschnitt (316), der sich von einem Ende des dritten Verlängerungsabschnitts (315) zu einer zweiten Öffnung (322) des Mediumströmungskanals (31) entlang der ersten linearen Richtung (Y) erstreckt.

4. Die Heizkammeranordnung der elektrischen Heizvorrichtung nach Anspruch 3, **dadurch gekennzeichnet, dass** eine aus der ersten linearen Richtung (Y) und der zweiten linearen Richtung (X) die Breitenrichtung der elektrischen Heizvorrichtung ist und die andere die Längsrichtung der elektrischen Heizvorrichtung ist.

5. Die Heizkammeranordnung des elektrischen Heizgeräts nach Anspruch 1, **dadurch gekennzeichnet, dass** die Verlängerungsspurlinie eine achsensymmetrische Form oder eine zentrosymmetrische Form aufweist.

6. Die Heizkammeranordnung des elektrischen Heizgeräts nach Anspruch 1, **dadurch gekennzeichnet, dass** die Strömungskanalstruktur (30) des elektrischen Heizgeräts umfasst:
einen Einströmhohlraum (41), der dazu eingerichtet ist, ein zu erwärmendes Wärmeübertragungsmedium aufzunehmen; und
einen Ausströmhohlraum (42), der dazu eingerichtet ist, ein erwärmtes Wärmeübertragungsmedium zu sammeln und abzugeben und mit dem Einströmhohlraum (41) über mehrere parallel angeordnete Mediumströmungskanäle (31) in Verbindung steht,
wobei die erste Öffnung (321) jedes der Mediumströmungskanäle (31) mit dem Einströmhohlraum (41) in Verbindung steht und die zweite Öffnung (322) jedes der Mediumströmungskanäle (31) mit dem Ausströmhohlraum (42) in Verbindung steht.

7. Die Heizkammeranordnung der elektrischen Heizvorrichtung nach Anspruch 6, **dadurch gekennzeichnet, dass** die Querschnittsfläche des Einströmhohlraums (41) entlang der Strömungsrichtung des Wärmeübertragungsmediums allmählich abnimmt; und/oder
die Querschnittsfläche des Ausströmhohlraums (42) entlang der Strömungsrichtung des Wärmeübertragungsmediums allmählich zunimmt.

8. Die Heizkammeranordnung der elektrischen Heizvorrichtung nach Anspruch 7, **dadurch gekennzeichnet, dass**
eine Höhe (h1) des Einströmhohlraums (41) in der Höhenrichtung des elektrischen Heizgeräts entlang der Strömungsrichtung des Wärmeübertragungsmediums allmählich abnimmt; und/oder
eine Breite (w1) des Einströmhohlraums (41) in der Breitenrichtung des elektrischen Heizgeräts entlang der Strömungsrichtung des Wärmeübertragungsmediums allmählich abnimmt; und/oder
eine Höhe des Ausströmhohlraums (42) in der Höhenrichtung des elektrischen Heizgeräts entlang der Strömungsrichtung des Wärmeübertragungsmediums allmählich zunimmt; und/oder
eine Breite der Ausströmungskavität (42) in der Breitenrichtung des elektrischen Heizelements entlang der Strömungsrichtung des Wärmeübertragungsmediums allmählich zunimmt.

9. Die Heizkammeranordnung der elektrischen Heizvorrichtung nach Anspruch 4, **dadurch gekennzeichnet, dass**
in der zweiten linearen Richtung (X) die erste Öffnung (321) jedes der Mediumströmungskanäle (31) an dem Einströmhohlraum (41) parallel angeordnet ist; und/oder
in der zweiten linearen Richtung (X) die zweite Öffnung (322) jedes der Mediumströmungskanäle (31) an dem Ausströmhohlraum (42) parallel angeordnet ist.

10. Die Heizkammeranordnung der elektrischen Heizvorrichtung nach Anspruch 9, **dadurch gekennzeichnet, dass** die Heizkammeranordnung mindestens eines der folgenden Merkmale aufweist:
jede der ersten Öffnungen (321) ist in der ersten linearen Richtung (Y) bündig angeordnet;
der Ausdehnungsgrad jeder der ersten Öffnungen (321) in Richtung einer Innenseitenwand der Heizkammeranordnung in der ersten linearen Richtung (Y) nimmt entlang der Strömungsrichtung des Wärmeübertragungsmediums allmählich zu;
der Ausdehnungsgrad jeder der ersten Öffnungen (321) in Richtung der Innenseitenwand der Heizkammeranordnung in der ersten linearen Richtung (Y) nimmt entlang der Strömungsrichtung des Wärmeübertragungsmediums allmählich ab;
der Ausdehnungsgrad jeder der ersten Öffnungen (321) in Richtung der Innenseitenwand der Heizkammeranordnung in der ersten linearen Richtung (Y) nimmt entlang der Strömungsrichtung des Wärmeübertragungsmediums allmählich zu und nimmt dann allmählich ab;
der Ausdehnungsgrad jeder der ersten Öffnungen (321) in Richtung der Innenseitenwand der Heizkammeranordnung in der ersten linearen Richtung (Y) nimmt entlang der Strömungsrichtung des Wärmeübertragungsmediums allmählich ab und steigt dann allmählich an;
jede der zweiten Öffnungen (322) ist in der ersten linearen Richtung (Y) bündig angeordnet;
der Ausdehnungsgrad jeder der zweiten Öffnungen (322) in Richtung der Innenseitenwand der Heizkammeranordnung in der ersten linearen Richtung (Y) nimmt entlang der Strömungsrichtung des Wärmeübertragungsmediums allmählich zu;
der Ausdehnungsgrad jeder der zweiten Öffnungen (322) in Richtung der Innenwand der Heizkammeranordnung in der ersten linearen Richtung (Y) nimmt entlang der Strömungsrichtung des Wärmeübertragungsmediums allmählich ab;
der Ausdehnungsgrad jeder der zweiten Öffnungen (322) in Richtung der Innenwand der Heizkammeranordnung in der ersten linearen Richtung (Y) nimmt entlang der Strömungsrichtung des Wärmeübertragungsmediums allmählich zu und nimmt dann allmählich ab; und
der Ausdehnungsgrad jeder der zweiten Öffnungen (322) in Richtung der Innenseitenwand der Heizkammeranordnung in der ersten linearen Richtung (Y) nimmt entlang der Strömungsrichtung des Wärmeübertragungsmediums allmählich ab und dann allmählich zu.

11. Die Heizkammeranordnung der elektrischen Heizung nach einem der Ansprüche 1 bis 10, **dadurch gekennzeichnet, dass** die Verlängerungsspurlinie des mindestens einen Mediumströmungskanals (31) unterbrochen ist.

12. Eine elektrische Heizung eines Elektrofahrzeugs, **dadurch gekennzeichnet, dass** die elektrische Heizung umfasst:
eine Heizkammeranordnung, wobei die Heizkammeranordnung die Heizkammeranordnung aus einem der Ansprüche 1 bis 11 ist; und
eine erste Hülle und eine zweite Hülle, wobei die erste Hülle und die zweite Hülle jeweils an zwei Seiten der Heizkammeranordnung angeordnet sind.

13. Ein Elektrofahrzeug, **dadurch gekennzeichnet, dass** das Elektrofahrzeug die elektrische Heizung nach Anspruch 12 umfasst, wobei das Elektrofahrzeug ein reines Elektrofahrzeug oder ein Hybridfahrzeug ist.

## Revendications

1. Ensemble cavité de chauffage d'un dispositif de chauffage électrique, l'ensemble cavité de chauffage comprenant :
une unité de chauffage électrique (20), située dans une cavité de chauffage (11) et configurée pour convertir de l'énergie électrique en énergie thermique ; et
une structure de canal d'écoulement (30), située dans la cavité d'échange de chaleur (12) et configurée pour permettre à un agent de transfert de chaleur de passer à travers la structure de canal d'écoulement (30) pour recevoir de l'énergie thermique à partir de l'unité de chauffage électrique (20), **caractérisé en ce que**,
la structure de canal d'écoulement (30) comprend une pluralité de canaux d'écoulement d'agent (31), la pluralité de canaux d'écoulement d'agent (31) s'étendant parallèlement les uns aux autres le long de lignes de voie d'extension respectives, et les lignes de voie d'extension ayant une relation de translation,
dans lequel la ligne de voie d'extension de chacun des canaux d'écoulement d'agent (31) est munie d'au moins une partir discontinue, la partie discontinue de chacun des canaux d'écoulement d'agent (31) formant une zone d'écoulement mélangé (34), et les nombres de canaux d'écoulement d'agent en amont et en aval de la zone d'écoulement mélangé (34) sont identiques ou différents, et
dans lequel une structure d'écoulement turbulent (35) est agencée dans la zone d'écoulement mélangé (34), la structure d'écoulement turbulent (35) comprenant une pluralité de colonnes d'écoulement turbulent qui s'étendent dans la direction de hauteur du dispositif de chauffage électrique et sont réparties à des intervalles les unes par rapport aux autres.

2. Ensemble cavité de chauffage du dispositif de chauffage électrique selon la revendication 1, **caractérisé en ce que**, la ligne de voie d'extension comprend au moins une forme en n.

3. Ensemble cavité de chauffage du dispositif de chauffage électrique selon la revendication 2, **caractérisé en ce que**, le canal d'écoulement d'agent (31) comprend :
une première portion d'extension (311), s'étendant linéairement à partir d'une première ouverture (321) du canal d'écoulement d'agent (31) le long d'une première direction linéaire (Y) ;
une deuxième portion d'extension (312), s'étendant linéairement à partir d'une extrémité de la première portion d'extension (311) le long d'une deuxième direction linéaire (X) verticale à la première direction linéaire (Y) ;
une portion d'extension coudée (310), s'étendant linéairement à partir d'une extrémité de la deuxième portion d'extension (312) le long de la première direction linéaire (Y) ;
une troisième portion d'extension (315), s'étendant à partir d'une extrémité de la portion d'extension coudée (310) le long de la deuxième direction linéaire (X) ; et
une quatrième portion d'extension (316), s'étendant à partir d'une extrémité de la troisième portion d'extension (315) jusqu'à une deuxième ouverture (322) du canal d'écoulement d'agent (31) le long de la première direction linéaire (Y).

4. Ensemble cavité de chauffage du dispositif de chauffage électrique selon la revendication 3, **caractérisé en ce que**, l'une parmi la première direction linéaire (Y) et la deuxième direction linéaire (X) est la direction de largeur du dispositif de chauffage électrique, et l'autre est la direction de longueur du dispositif de chauffage électrique.

5. Ensemble cavité de chauffage du dispositif de chauffage électrique selon la revendication 1, **caractérisé en ce que**, la ligne de voie d'extension est de forme asymétrique ou de forme centrosymétrique.

6. Ensemble cavité de chauffage du dispositif de chauffage électrique selon la revendication 1, **caractérisé en ce que**, la structure de canal d'écoulement (30) du dispositif de chauffage électrique comprend :
une cavité d'écoulement entrant (41), configurée pour recevoir un agent de transfert de chaleur à chauffer ; et
une cavité d'écoulement sortant (42), configurée pour collecter et évacuer un agent de transfert de chaleur chauffé et communiquer avec la cavité d'écoulement entrant (41) par l'intermédiaire d'une pluralité de canaux d'écoulement d'agent (31) qui sont agencés en parallèle,
dans lequel la première ouverture (321) de chacun des canaux d'écoulement d'agent (31) communique avec la cavité d'écoulement entrant (41), et la deuxième ouverture (322) de chacun des canaux d'écoulement d'agent (31) communique avec la cavité d'écoulement sortant (42).

7. Ensemble cavité de chauffage du dispositif de chauffage électrique selon la revendication 6, **caractérisé en ce que**, l'aire en coupe transversale de la cavité d'écoulement entrant (41) diminue progressivement le long de la direction d'écoulement de l'agent de transfert de chaleur ; et/ou
l'aire en coupe de transversale de la cavité d'écoulement sortant (42) augmente progressivement le long de la direction d'écoulement de l'agent de transfert de chaleur.

8. Ensemble cavité de chauffage du dispositif de chauffage électrique selon la revendication 7, **caractérisé en ce que**,
une hauteur (h1) de la cavité d'écoulement entrant (41) dans la direction de hauteur du dispositif de chauffage électrique diminue progressivement le long de la direction d'écoulement de l'agent de transfert de chaleur ; et/ou
une largeur (w1) de la cavité d'écoulement entrant (41) dans la direction de largeur du dispositif de chauffage électrique diminue progressivement le long de la direction d'écoulement de l'agent de transfert de chaleur ; et/ou
une hauteur de la cavité d'écoulement sortant (42) dans la direction de hauteur du dispositif de chauffage électrique augmente progressivement le long de la direction d'écoulement de l'agent de transfert de chaleur ; et/ou
une largeur de la cavité d'écoulement sortant (42) dans la direction de largeur du dispositif de chauffage électrique augmente progressivement le long de la direction d'écoulement de l'agent de transfert de chaleur.

9. Ensemble cavité de chauffage du dispositif de chauffage électrique selon la revendication 4, **caractérisé en ce que**,
dans la deuxième direction linéaire (X), la première ouverture (321) de chacun des canaux d'écoulement d'agent (31) au niveau de la cavité d'écoulement entrant (41) est agencée en parallèle ; et/ou
dans la deuxième direction linéaire (X), la deuxième ouverture (322) de chacun des canaux d'écoulement d'agent (31) au niveau de la cavité d'écoulement sortant (42) est agencée en parallèle.

10. Ensemble cavité de chauffage du dispositif de chauffage électrique selon la revendication 9, **caractérisé en ce que**, l'ensemble cavité de chauffage présente au moins l'une des caractéristiques suivantes :
chacune des premières ouvertures (321) est agencée dans la première direction linéaire (Y) de manière affleurante ;
le degré d'extension de chacune des premières ouvertures (321) vers une paroi latérale interne de l'ensemble cavité de chauffage dans la première direction linéaire (Y) augmente progressivement le long de la direction d'écoulement de l'agent de transfert de chaleur ;
le degré d'extension de chacune des premières ouvertures (321) vers la paroi latérale interne de l'ensemble cavité de chauffage dans la première direction linéaire (Y) diminue progressivement le long de la direction d'écoulement de l'agent de transfert de chaleur ;
le degré d'extension de chacune des premières ouvertures (321) vers la paroi latérale interne de l'ensemble cavité de chauffage dans la première direction linéaire (Y) augmente progressivement, puis diminue progressivement le long de la direction d'écoulement de l'agent de transfert de chaleur ;
le degré d'extension de chacune des premières ouvertures (321) vers la paroi latérale interne de l'ensemble cavité de chauffage dans la première direction linéaire (Y) diminue progressivement, puis augmente progressivement le long de la direction d'écoulement de l'agent de transfert de chaleur ;
chacune des deuxièmes ouvertures (322) est agencée dans la première direction linéaire (Y) de manière affleurante ;
le degré d'extension de chacune des deuxièmes ouverture (322) vers la paroi latérale interne de l'ensemble cavité de chauffage dans la première direction linéaire (Y) augmente progressivement le long de la direction d'écoulement de l'agent de transfert de chaleur ;
le degré d'extension de chacune des deuxièmes ouvertures (322) vers la paroi latérale interne de l'ensemble cavité de chauffage dans la première direction linéaire (Y) diminue progressivement le long de la direction d'écoulement de l'agent de transfert de chaleur ;
le degré d'extension de chacune des deuxièmes ouvertures (322) vers la paroi latérale interne de l'ensemble cavité de chauffage dans la première direction linéaire (Y) augmente progressivement, puis diminue progressivement le long de la direction d'écoulement de l'agent de transfert de chaleur ; et
le degré d'extension de chacune des deuxièmes ouvertures (322) vers la paroi latérale interne de l'ensemble cavité de chauffage dans la première direction linéaire (Y) diminue progressivement, puis augmente progressivement le long de la direction d'écoulement de l'agent de transfert de chaleur.

11. Ensemble cavité de chauffage du dispositif de chauffage électrique selon l'une quelconque des revendications 1 à 10, **caractérisé en ce que**, la ligne de voie d'extension de l'au moins un canal d'écoulement d'agent (31) est discontinue.

12. Dispositif de chauffage électrique d'un véhicule électrique, **caractérisé en ce que**, le dispositif de chauffage électrique comprend :
un ensemble cavité de chauffage, l'ensemble cavité de chauffage étant l'ensemble cavité de chauffage de l'une quelconque des revendications 1 à 11 ; et
une première enveloppe et une deuxième enveloppe, la première enveloppe et la deuxième enveloppe étant agencées sur deux côtés de l'ensemble cavité de chauffage respectivement.

13. Véhicule électrique, **caractérisé en ce que**, le véhicule électrique comprend le dispositif de chauffage de la revendication 12, le véhicule électrique étant un véhicule tout électrique ou un véhicule à puissance hybride.
